# EUROPÄISCHE PATENTSCHRIFT

(11) **EP 1 982 849 B1**
(45) Veröffentlichungstag und Bekanntmachung des Hinweises auf die Patenterteilung: **30.12.2009**
(21) Anmeldenummer: 08151596.7
(22) Anmeldetag: 19.02.2008
(51) Int. Cl.: B60C 17/00

(54) **Fahrzeugluftreifen mit Notlaufeigenschaften**
Vehicle pneumatic type with emergency operation characteristics
Pneus de véhicule dotés de propriétés d'urgence

(30) Priorität: 21.04.2007 DE 102007018970
(43) Veröffentlichungstag der Anmeldung: 22.10.2008
(73) Patentinhaber: Continental Aktiengesellschaft, 30165 Hannover (DE)
(72) Erfinder: Fidan, Mehmet Saddetin, 30827 Garbsen (DE); Menz, Rüdiger, 30171 Hannover (DE)
(74) Vertreter: Finger, Karsten

(56) Entgegenhaltungen:
- EP-A- 0 922 593
- EP-A- 0 924 109
- EP-A- 1 186 450
- WO-A-00/46047
- JP-A- 11 254 919
- JP-A- 2000 025 423

## Beschreibung

Die Erfindung betrifft einen Fahrzeugluftreifen mit Notlaufeigenschaften bei Druckluftverlust, bestehend aus einem profilierten Laufstreifen, einem mehrlagigen Gürtelverband, einer Innenschicht, einer zumindest einlagig ausgeführten Karkasse, Seitenwänden und mit zumindest je einem im Bereich der Seitenwand eingebrachten, im Querschnitt mondsichelförmigen Verstärkungsprofil, welches sich jeweils zumindest über einen Großteil der Seitenwandlänge erstreckt und welches wenigstens eine Verstärkungslage aufweist, die konturparallel zum Verstärkungsprofil angeordnet ist, wobei die Verstärkungslage innerhalb des Verstärkungsprofils ringkreisförmig über den Umfang der Seitenwand geschlossen ist und parallel zueinander angeordnete Festigkeitsträger aufweist.

Es sind verschiedene Ausführungsformen von im Pannenfall selbstragenden Fahrzeugluftreifen bekannt. So gibt es beispielsweise eine Vielzahl von Lösungsvorschlägen mit Verstärkungsprofilen in den Reifenseitenwänden. Die Verstärkungsprofile sind meist im Querschnitt mondsichelförmig ausgeführt und bestehen aus Gummi, wobei die Eigenschaften des Gummimaterials und die Auslegung der Verstärkungsprofile sicher stellen sollen, dass der Reifen bei Druckverlust im Pannenfall über eine gewisse Notlaufstrecke selbstragend erhalten bleibt. Ein derartiger Reifen ist beispielsweise aus der DE-A-2 331 530 bekannt geworden. Die Verstärkungsprofile sind jedoch massiv und haben den Nachteil, die Seitenwände des Reifens ebenfalls im Normalbetrieb zu versteifen, wodurch die Einfederung und die Fahrkomforteigenschaften des Reifens verschlechtert sind. Ebenfalls ist das Gewicht des Reifens durch das Einbringen des aus Gummi bestehenden massiven Verstärkungsprofils unerwünscht erhöht.

Diese Nachteile versucht man bei dem Notlaufreifen der gattungsgemäßen WO-A-00/46047 zu vermeiden, indem die Auslegung des Verstärkungsprofils vergleichsweise klein ist. Das in jeder Reifenseitenwand eingebrachte Verstärkungsprofil weist daher, um die Notlaufeigenschaften trotz der vergleichsweise geringen Dimension des Verstärkungsprofils sicher zu stellen, zwei parallel zueinander angeordnete Festigkeitsträgerlagen auf, deren Festigkeitsträger derart angeordnet sind dass sie einen Winkel zwischen 20° und 55° mit der Radialrichtung zwischen sich einschließen. Die Festigkeitsträger der beiden Festigkeitsträgerlagen steigen gegenläufig, so dass die Festigkeitsträger beider Lagen einander kreuzen.

Durch diese Maßnahme der Anordnung von zusätzlichen Festigkeitsträgerlagen im Inneren des Verstärkungsprofils ist ein Reifen geschaffen, der im Normalbetrieb gute Fahreigenschaften und der trotz klein dimensioniertem Verstärkungsprofil im Notlauf selbstragend erhaltend ist. Dennoch besteht weiterhin Verbesserungsbedarf in Bezug auf die bisher genannten Nachteile.

Es ist daher die Aufgabe der Erfindung, einen Fahrzeugluftreifen mit Notlaufeigenschaften bereitzustellen, dessen Einfederung und dessen Fahreigenschaften gegenüber bekannten Notlaufreifen verbessert ist, der aber dennoch im Notlauf ausreichend selbstragend erhaltend ist.

Die Aufgabe wird gelöst, indem die Festigkeitsträger der Verstärkungslage innerhalb des Verstärkungsprofils in etwa in einem Winkel von 90° zur Radialrichtung angeordnet sind. Die Erfindung besteht also darin, dass die Festigkeitsträger der im Verstärkungsprofil angeordneten Verstärkungslage in Umfangsrichtung, also in einem Winkel von in etwa 90° zur Radialrichtung parallel zur Kontur des Verstärkungsprofils verlaufen. Eine derartige Orientierung der Festigkeitsträger innerhalb des Verstärkungsprofils hat sich überraschenderweise als besonders wirkungsvoll zur Versteifung der Seitenwand im Notlaufbetrieb erwiesen, während im normalen Fahrbetrieb die Einfederungseigenschaften und die Komforteigenschaften kaum beeinflusst werden. Denn durch die Anordnung der Verstärkungslage, die über den Umfang der Seitenwand ringkreisförmig innerhalb des Verstärkungsprofils geschlossen angeordnet ist und deren Festigkeitsträger in Umfangsrichtung verlaufen, kann das Verstärkungsprofil kleiner dimensioniert ausgelegt werden, wodurch weniger Gummimaterial für das Verstärkungsprofil verbraucht wird, die Reifenseitenwand im Normalbetrieb weniger versteift ist, der Reifen leichter an Gewicht ist und wodurch der Rollwiderstand verbessert ist.
Es hat sich gezeigt, dass die Karkasse im Bereich der Bodenaufstandsfläche und besonders während des Ein- und Auslaufs des Reifens im Bereich der Seitenwand in Umfangsrichtung gedehnt wird. Diese Dehnung ist deutlich stärker als die Dehnung der Karkasse in radialer Richtung oder als die Dehnung in einer von der Umfangsrichtung abweichenden Richtung. Die Dehnung ist insbesondere im Notlaufbetrieb um ein Vielfaches stärker als im Normalbetrieb des Reifens, da der Reifen im Notlauf einer stärkeren Verformung während des Ein- und Auslaufs unterliegt. Daher können die erfindungsgemäß in Umfangsrichtung angeordneten Festigkeitsträger der Verstärkungslage, welche innerhalb des Verstärkungsprofils angeordnet sind, diese Dehnung blockieren. Die Seitenwand ist trotz möglicher verringerter Verstärkungsprofildicke steif und erhält den Reifen im Notlaufbetrieb selbstragend.

Vorteilhaft ist es, wenn die Festigkeitsträger metallische oder nicht-metallische Corde oder Monofilamente sind. Zusätzlich zu dem vorbeschriebenen Effekt erfolgt bei Biegung des Reifens eine Art von Abstützung der Festigkeitsträger untereinander, wodurch die Seitenwand zusätzlich versteift wird. Zum Einsatz können alle dem Fachmann gebräuchlichen Festigkeitsträgermaterialien kommen. Die Festigkeitsträger können über den Umfang auch diskontinuierlich / durchbrochen angeordnet sein, um während der Reifenherstellung eine hohe Erhebung zu erlauben.
Es können ebenfalls Festigkeitsträger mit geeignetem progressivem Spannungs-/Dehnungsverlauf eingesetzt werden, um unter im Normalbetrieb des Reifens auftretenden Spannungen in Umfangsrichtung eine Einfederung des Reifens zu erlauben, während dann bei stärkeren, im Notlaufbetrieb auftretenden Spannungen die Seitenwand versteift wird.

In einer anderen Ausführungsform sind die in Umfangsrichtung orientierten Festigkeitsträger innerhalb des Verstärkungsprofils Kurzfasern. Es tritt ein mit Cord-Festigkeitsträgem vergleichbarer Effekt auf, aber das Processing ist einfacher.

In einer weiteren Ausführungsform sind wenigstens zwei Verstärkungslagen parallel zueinander innerhalb des Verstärkungsprofils angeordnet, wodurch die Seitenwand besonders steif zu gestalten ist und die Dimension des Verstärkungsprofils weiterhin zu verkleinern ist.

Die parallel zueinander verlaufenden Festigkeitsträger dieser weiteren Festigkeitsträgerlage(n) können ebenfalls in etwa in einem Winkel von 90° zur Radialrichtung angeordnet werden oder aber auch für eine gerichtete, anisotrope Versteifung in einem anderen Winkel als in etwa 90° zur Radialrichtung angeordnet sein.

In einer weiteren Ausführungsform der vorliegenden Erfindung ist wenigstens eine zusätzliche Verstärkungslage axial außerhalb der Karkasse in der Seitenwand angeordnet, deren Festigkeitsträger parallel zueinander und voneinander beabstandet in Umfangsrichtung angeordnet sind.
Durch die Anordnung wenigstens einer zusätzlichen Festigkeitsträgerlage in der Seitenwand des Reifens weist sowohl das Verstärkungsprofil als auch die Seitenwand wenigstens je eine Verstärkungslage auf. Die Dehnung des Reifens in Umfangrichtung ist stärker blockiert, so dass die Seitenwand steifer ist. Diese Steifheit der Seitenwand erlaubt es, die Dimension des Verstärkungsprofils weiter zu verkleinern. Durch die kleinere Auslegung des aus Gummi bestehenden Verstärkungsprofils ist der Fahrkomfort des Reifens im Normalbetrieb verbessert, der Rollwiderstand ist verringert und es ist an Reifengewicht eingespart, aber dennoch ist ein zuverlässiger Notlaufbetrieb ermöglicht. Die zusätzliche Verstärkungslage kann axial außen auf der Karkasslage aufliegen und/oder axial von der Karkasslage beabstandet in der Seitenwand angeordnet sein.

Vorteilhaft ist es, wenn sich die zusätzliche Verstärkungslage derart über die Seitenwandlänge erstreckt, dass die zusätzliche Verstärkungslage in etwa 5mm unterhalb des Gürtels beginnt und sich bis 5mm oberhalb des oberen Endes des Wulstkernes erstreckt. Hierdurch ist fast die gesamte Seitenwand in Umfangsrichtung versteifbar.

Weitere Merkmale, Vorteile und Einzelheiten der Erfindung werden anhand der Zeichnungen, die schematische Ausführungsbeispiele darstellen, näher erläutert. Es zeigen die
- Fig. 1: einen Querschnitt durch einen Fahrzeugluftreifen mit einem erfindungsgemäßen Verstärkungsprofil
- Fig.2: eine dreidimensionale Ansicht eines Verstärkungsprofils
- Fig.3: eine dreidimensionale Ansicht eines anderen Verstärkungsprofils
- Fig.4: einen Querschnitt durch einen weiteren Fahrzeugluftreifen
- Fig.5: einen Querschnitt durch einen anderen Fahrzeugluftreifen.

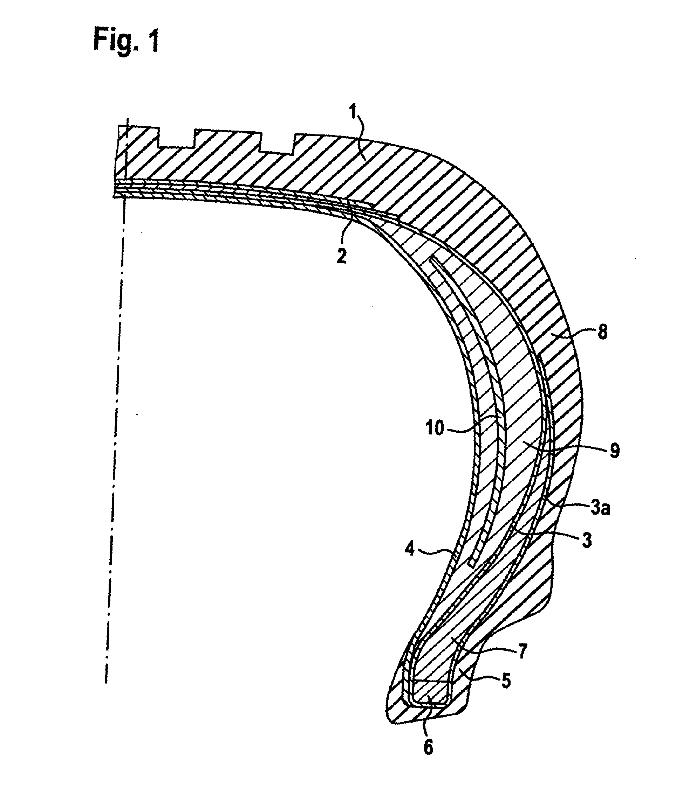

Die **Fig.1** zeigt die wesentlichen Bestandteile, aus welchen sich der erfindungsgemäße Reifen zusammensetzt. Dieses sind ein profilierter Laufstreifen 1, ein bei der gezeigten Ausführung aus zwei Lagen bestehender Gürtel 2, eine Karkasse 3, eine weitgehend luftdicht ausgeführte Innenschicht 4, Wülste 5 mit Wulstkernen 6 und Wulstkernprofilen 7, sowie Seitenwänden 8 und das in seiner Kontur etwa mondsichelförmige Verstärkungsprofil 9, welches in etwa konturparallel im Inneren eine Verstärkungslage 10 aufweist. Die beiden Lagen des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage 2 in kreuzender Anordnung zu den Stahlcorden der zweiten Lage 2 orientiert sind und mit der Reifenumfangsrichtung jeweils einen Winkel zwischen 15° und 30° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von innen nach außen geführt, ihre Hochschläge 3a verlaufen neben den Wulstkernprofilen 7 in Richtung Gürtel 2 und sind auf die Karkasse 3 rückgeführt.

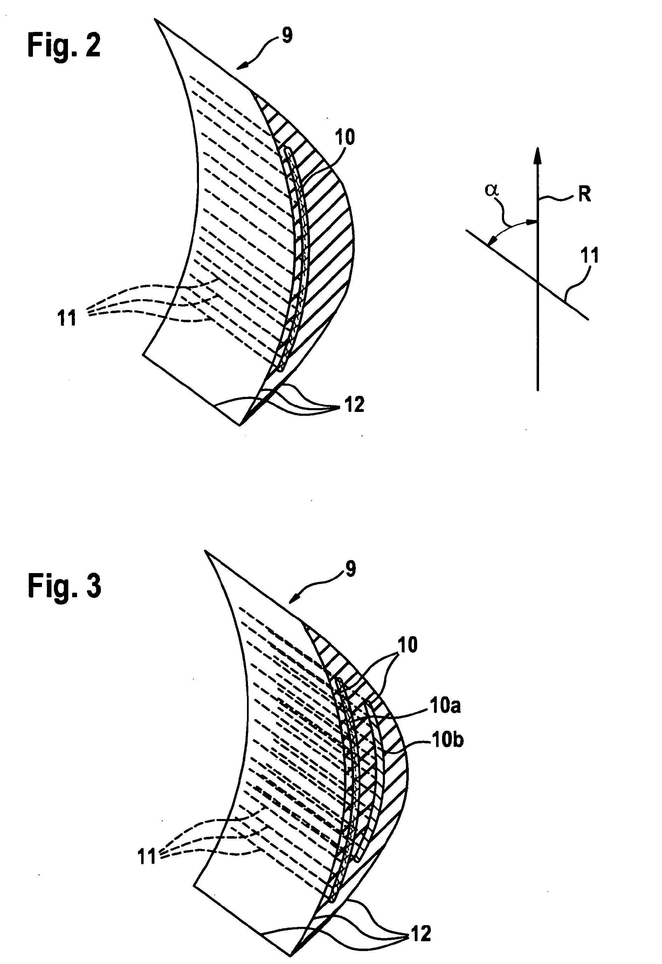

Das Verstärkungsprofil 9 weist im Inneren wenigstens eine Verstärkungslage 10 auf, welche parallel zur Kontur des Verstärkungsprofils 9 angeordnet ist, wobei die Verstärkungslage 10 innerhalb des Verstärkungsprofils 9 ringkreisförmig über den Umfang der Seitenwand 8 geschlossen ist und parallel zueinander in Umfangsrichtung verlaufende Festigkeitsträger 11 aufweist. Eine Ausführungsform des Verstärkungsprofils 9 ist in der **Fig.2** derart dargestellt, in der die Anordnung der Festigkeitsträger 11 der Verstärkungslage 10 innerhalb des Verstärkungsprofils 9 durch Abdeckung des Gummimaterials sichtbar ist. Die Fig.2 zeigt, dass die Verstärkungslage 10 parallel zur Kontur 12 des Verstärkungsprofils 9, benachbart zur axial innen gelegenen Verstärkungsprofilseitenfläche, angeordnet ist. Die Verstärkungslage 10 weist parallel zueinander angeordnete Festigkeitsträger 11, hier getwistete Metallcorde, auf. Der Verlauf der Festigkeitsträger 11 in einem Winkel α von in etwa 90° zur Radialrichtung (Pfeil) bewirkt eine Versteifung der Seitenwand 8 in Umfangsrichtung. Durch die Anordnung der Verstärkungslage 10, die über den Umfang der Seitenwand 8 ringkreisförmig geschlossen und konturparallel innerhalb des Verstärkungsprofils 9 angeordnet ist und deren Festigkeitsträger 11 in Umfangsrichtung verlaufen, kann das Verstärkungsprofil 9 kleiner dimensioniert ausgelegt werden, wodurch weniger Gummimaterial für das Verstärkungsprofil 9 verbraucht wird, wodurch die Reifenseitenwand 8 im Normalbetrieb weniger versteift ist, die Komforteigenschaften des Reifens vergleichsweise gut sind und wodurch der Reifen leichter an Gewicht ist.

Das Verstärkungsprofil 9 der **Fig.3** weist bei Gummiabdeckung sichtbar zwei parallel zueinander zum Verstärkungsprofil 9 konturparallel angeordnete Verstärkungslagen 10a, 10b auf. Die Festigkeitsträger 11 dieser beiden Verstärkungslagen 10a, 10b verlaufen wiederum in etwa in Umfangsrichtung und sind parallel zueinander angeordnet. Die Festigkeitsträger 11 der axial innen innerhalb des Verstärkungsprofils 9 angeordneten Verstärkungslage 10a weisen einen größeren Abstand zueinander auf als die Festigkeitsträger 11 der axial außen gelegenen Verstärkungslage 10b, die eine größere Corddichte aufweisen, weil sie dichter zueinander angeordnet sind.

Die Anordnung der Festigkeitsträger 11 der weiteren Verstärkungslage 10 kann von der Umfangsrichtung abweichend sein. Die weitere Verstärkungslage 10 kann axial innen oder axial außen innerhalb des Verstärkungsprofils 9 angeordnet sein.

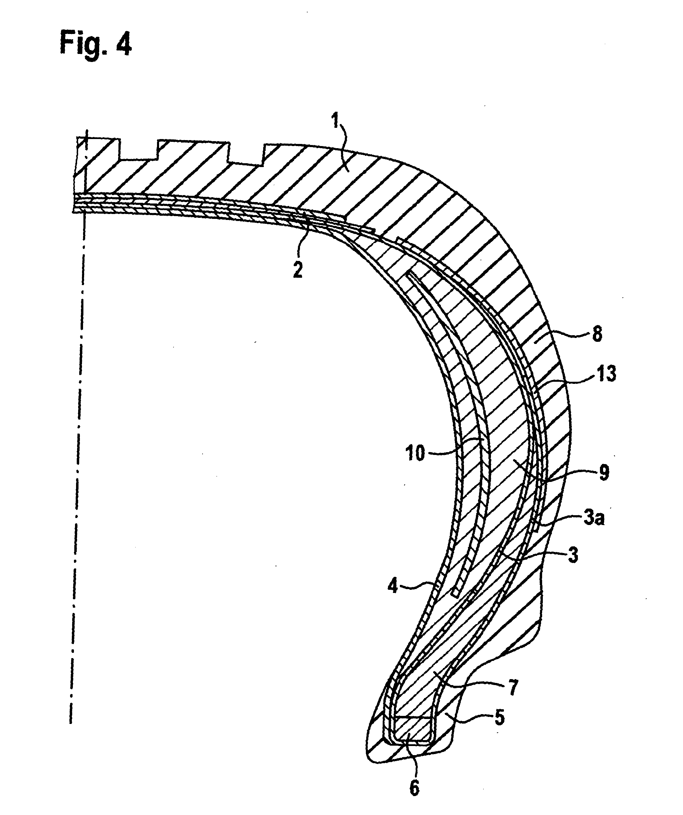

Die **Fig.4** zeigt einen anderen Fahrzeugluftreifen, der die gleichen Bauteile des Reifens der Fig. 1 aufweist, in dem aber eine zur Verstärkungslage 10 innerhalb des Verstärkungsprofils 9 zusätzliche Verstärkungslage 13 in der Seitenwand 8 angeordnet ist. Die zusätzliche Verstärkungslage 13 ist axial außen auf der Karkasse 3 im Bereich der Seitenwand 8 aufgebracht und ringkreisförmig über den Umfang der Seitenwand 8 geschlossen. Die Festigkeitsträger 11 dieser zusätzlichen Festigkeitsträgerlage 13 sind beabstandet und parallel zueinander -analog zu den Festigkeitsträgern 11 der Festigkeitsträgerlage 10- in etwa in Umfangsrichtung orientiert. Die Festigkeitsträger 11 sind in ihrer umfänglichen Erstreckung vorzugsweise unendlich lang ausgebildet, um die im Fahrbetrieb des Reifens auftretenden Dehnungen in Umfangsrichtung gut aufnehmen zu können. Dieses ist vorzugsweise dann erreicht, wenn die Festigkeitsträger ein Gewebe bilden oder wenn die Festigkeitsträger durch Spulung während des Reifenherstellungsprozesses aufgebracht sind. Die Seitenwand 8 ist derart versteift, dass das Verstärkungsprofil 9 kleiner dimensioniert ausgeführt werden kann und dennoch im Notlauf den Reifen selbstragend erhält. Die zusätzliche Verstärkungslage 13 erstreckt sich von unterhalb der Kante des Gürtels 2, vorzugsweise 5mm von der Gürtelkante beabstandet, über die Länge der Seitenwand hinunter bis in den oberen Bereich des Kernprofiles 7. Es ist wichtig, dass die zusätzliche Verstärkungslage 13 über einen Großteil derjenigen Länge und in demjenigen Bereich der Seitenwand 8 angeordnet ist, der im Betrieb des Reifens in Umfangsrichtung gedehnt wird und dessen Dehnung nicht durch andere in Umfangsrichtung verlaufende Festigkeitsträger enthaltene Reifenbauteile, wie den Wulstkern 6 oder den Gürtel 2, insbesondere die Gürtelbandage, blockiert wird.

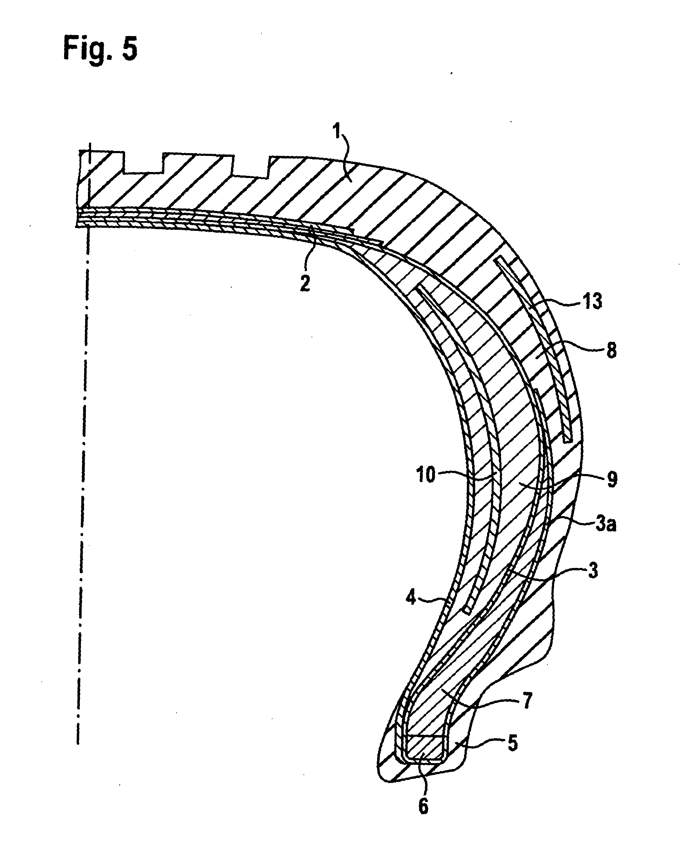

In der **Fig.5** ist ein anderer Fahrzeugluftreifen dargestellt, der die gleichen Bauteile des Reifens der Fig. 1 aufweist, in dem aber eine weitere zusätzliche Verstärkungslage 13 in der Seitenwand 8 axial von der Karkasse 3, alternativ zur Anordnung der zusätzlichen Verstärkungslage der Ausführungsform der Fig.4, beabstandet angeordnet ist. Die Festigkeitsträger 11 der zusätzlichen Verstärkungslage 13 sind parallel zueinander und beabstandet voneinander in Umfangsrichtung angeordnet, um die in Umfangrichtung auftretenden Dehnungen während des Fahrbetriebes aufnehmen zu können. Die Verstärkungslage erstreckt sich über die Höhe der Seitenwand derart, dass sie unterhalb des Gürtels beginnt und in etwa im Bereich des oberen Apexendes endet.

Die Anordnung der zusätzlichen Verstärkungslagen 13 gemäß der Reifen der Fig.4 oder Fig.5 stellt eine wirksame Klebefläche der in Umfangsrichtung angeordneten Festigkeitsträger 11 zur Gummimatrix zur Verfügung. Die Festigkeitsträger 11 sind mit dem Gummi über den gesamten Umfang des Reifens verbunden, so dass grundsätzlich ein sehr großer Bereich der Gummimatrix links und rechts der Bodenaufstandsfläche in den Lastfall einbezogen werden kann. Denkbar sind ca. 200mm links und rechts der Bodenaufstandsfläche. Auf diese Weise sind Schubspannungen im Gummi in der Klebezone gering, wodurch die Haltbarkeit des Gummis dieser Verstärkungslage erhöht ist.

### Bezugszeichenliste

### (Teil der Beschreibung)

- 1: Laufstreifen
- 2: Gürtel
- 3: Karkasse
- 4: Innenschicht
- 5: Wulst
- 6: Wulstkern
- 7: Wulstkernprofil
- 8: Seitenwand
- 9: Verstärkungsprofil
- 10: Verstärkungslage
- 11: Festigkeitsträger
- 12: Verstärkungsprofilkontur
- 13: Zusätzliche Verstärkungslage

## Patentansprüche

1. Fahrzeugluftreifen mit Notlaufeigenschaften bei Druckluftverlust, bestehend aus einem profilierten Laufstreifen (1), einem mehrlagigen Gürtelverband (2), einer Innenschicht (4), einer zumindest einlagig ausgeführten Karkasse (3), Seitenwänden (8) und mit zumindest je einem im Bereich der Seitenwand (8) eingebrachten, im Querschnitt mondsichelförmigen Verstärkungsprofil (9), welches sich jeweils zumindest über einen Großteil der Seitenwandlänge erstreckt und welches wenigstens eine Verstärkungslage (10) aufweist, die konturparallel zum Verstärkungsprofil (9) in diesem angeordnet ist, wobei die Verstärkungslage (10) innerhalb des Verstärkungsprofils (9) ringkreisförmig über den Umfang der Seitenwand (8) geschlossen ist und parallel zueinander angeordnete Festigkeitsträger (11) aufweist,
**dadurch gekennzeichnet,**
**dass** die Festigkeitsträger (11) der Verstärkungslage (10) in etwa in einem Winkel von 90° zur Radialrichtung angeordnet sind.

2. Fahrzeugluftreifen nach Anspruch 1,
**dadurch gekennzeichnet, dass** die Festigkeitsträger (11) metallische oder nichtmetallische Corde oder Monofilamente sind.

3. Fahrzeugluftreifen nach Anspruch 1,
**dadurch gekennzeichnet, dass** die Festigkeitsträger (11) Kurzfasern sind.

4. Fahrzeugluftreifen nach einem der vorangehenden Ansprüche,
**dadurch gekennzeichnet, dass** wenigstens zwei Verstärkungslagen (10a, 10b) innerhalb des Verstärkungsprofils (9) in etwa parallel zueinander angeordnet sind.

5. Fahrzeugluftreifen nach Anspruch 4,
**dadurch gekennzeichnet, dass** die Festigkeitsträger (11) der weiteren Verstärkungslage(n) (10) ebenfalls in etwa in einem Winkel von 90° zur Radialrichtung angeordnet sind.

6. Fahrzeugluftreifen nach Anspruch 4,
**dadurch gekennzeichnet, dass** die Festigkeitsträger (11) der weiteren Verstärkungslage(n) (10) in einem Winkel zur Radialrichtung angeordnet sind, der von einem Winkel von in etwa 90° zur Radialrichtung abweichend ist.

7. Fahrzeugluftreifen nach einem oder mehreren der vorangehenden Ansprüche,
**dadurch gekennzeichnet, dass** wenigstens eine zusätzliche Verstärkungslage (13) axial außerhalb der Karkasse (3) in der Seitenwand (8) angeordnet ist, deren Festigkeitsträger (11) parallel zueinander in Umfangsrichtung angeordnet sind.

8. Fahrzeugluftreifen nach Anspruch 7,
**dadurch gekennzeichnet, dass** die zusätzliche Verstärkungslage (13) axial außen auf der Karkasslage (3) aufliegt.

9. Fahrzeugluftreifen nach Anspruch 7,
**dadurch gekennzeichnet, dass** die zusätzliche Verstärkungslage (13) axial beabstandet von der Karkasslage (3) angeordnet ist.

10. Fahrzeugluftreifen nach einem oder mehreren der Ansprüche 6 - 9,
**dadurch gekennzeichnet, dass** sich die zusätzliche Verstärkungslage (13) derart über die Länge der Seitenwand (8) erstreckt, dass die zusätzliche Verstärkungslage (13) in etwa 5mm unterhalb des Gürtels (2) beginnt und sich in etwa bis 30mm oberhalb des oberen Endes des Wulstkernes (6) erstreckt.

## Claims

1. Pneumatic vehicle tyre with runflat properties when there is a loss of inflation pressure, comprising a profiled tread rubber (1), a multi-ply breaker belt assembly (2), an inner layer (4), a carcass (3) of at least a single-ply configuration, sidewalls (8) and at least one cross-sectionally crescent-shaped reinforcing profile (9), which is respectively incorporated in the region of each side wall (8), in each case extends at least over a large part of the length of the sidewall and has at least one reinforcing ply (10), which is arranged in the reinforcing profile (9), parallel to the contour thereof, the reinforcing ply (10) within the reinforcing profile (9) being closed in the form of a circular ring over the circumference of the sidewall (8) and having reinforcing elements (11) arranged parallel to one another, **characterized in that** the reinforcing elements (11) of the reinforcing ply (10) are arranged approximately at an angle of 90° to the radial direction.

2. Pneumatic vehicle tyre according to Claim 1, **characterized in that** the reinforcing elements (11) are metallic or non-metallic cords or monofilaments.

3. Pneumatic vehicle tyre according to Claim 1, **characterized in that** the reinforcing elements (11) are short fibres.

4. Pneumatic vehicle tyre according to one of the preceding claims, **characterized in that** at least two reinforcing plies (10a, 10b) are arranged within the reinforcing profile (9) approximately parallel to one another.

5. Pneumatic vehicle tyre according to Claim 4, **characterized in that** the reinforcing elements (11) of the further reinforcing ply/plies (10) are likewise arranged approximately at an angle of 90° to the radial direction.

6. Pneumatic vehicle tyre according to Claim 4, **characterized in that** the reinforcing elements (11) of the further reinforcing ply/plies (10) are arranged at an angle to the radial direction that differs from an angle of approximately 90° to the radial direction.

7. Pneumatic vehicle tyre according to one or more of the preceding claims, **characterized in that** arranged axially outside the carcass (3) in the sidewall (8) is at least one additional reinforcing ply (13), the reinforcing elements (11) of which are arranged parallel to one another in the circumferential direction.

8. Pneumatic vehicle tyre according to Claim 7, **characterized in that** the additional reinforcing ply (13) lies axially outside on the carcass ply (3).

9. Pneumatic vehicle tyre according to Claim 7, **characterized in that** the additional reinforcing ply (13) is arranged axially at a distance from the carcass ply (3).

10. Pneumatic vehicle tyre according to one of Claims 6 - 9, **characterized in that** the additional reinforcing ply (13) extends over the length of the sidewall (8) in such a way that the additional reinforcing ply (13) begins approximately 5 mm below the breaker belt (2) and extends approximately to 30 mm above the upper end of the bead core (6).

## Revendications

1. Bandage pneumatique pour roue de véhicule doté de propriétés de roulage de secours en cas de perte de pression d'air,
constitué d'une bande de roulement profilée (1), d'un ensemble multicouche de ceinture (2), d'une couche intérieure (4), d'une carcasse (3) constituée d'au moins une couche, de parois latérales (8) et d'au moins un profilé de renfort (9) placé dans la zone occupée par chaque paroi latérale (8), dont la section transversale a la forme d'un croissant de lune, chacun s'étendant sur au moins une grande partie de la longueur des parois latérales et présentant au moins une couche de renfort (10) disposée parallèlement au contour du profilé de renfort (9),
la couche de renfort (10) étant fermée en anneau circulaire à l'intérieur du profilé de renfort (9) sur la périphérie de la paroi latérale (8) et présentant des renforts (11) disposés parallèlement les uns aux autres,
**caractérisé en ce que**
les renforts (11) de la couche de renfort (10) sont disposés à un angle de sensiblement 90° par rapport à la direction radiale.

2. Bandage pneumatique pour roue de véhicule selon la revendication 1, **caractérisé en ce que** les renforts (11) sont des câbles en monofilament métallique ou non métallique.

3. Bandage pneumatique pour roue de véhicule selon la revendication 1, **caractérisé en ce que** les renforts (11) sont des fibres courtes.

4. Bandage pneumatique pour roue de véhicule selon l'une des revendications précédentes, **caractérisé en ce qu'**au moins deux couches de renfort (10a, 10b) sont disposées sensiblement en parallèle les unes aux autres à l'intérieur du profilé de renfort (9).

5. Bandage pneumatique pour roue de véhicule selon la revendication 4, **caractérisé en ce que** les renforts (11) de l'autre ou des autres couches de renfort (10) sont également disposés à un angle de sensiblement 90° par rapport à la direction radiale.

6. Bandage pneumatique pour roue de véhicule selon la revendication 4, **caractérisé en ce que** les renforts (11) de l'autre ou des autres couches de renfort (10) sont disposés par rapport à la direction radiale à un angle qui diffère d'un angle de sensiblement 90° par rapport à la direction radiale.

7. Bandage pneumatique pour roue de véhicule selon l'une ou plusieurs des revendications précédentes, **caractérisé en ce qu'**au moins une couche supplémentaire de renfort (13) est disposée axialement à l'extérieur de la carcasse (3) dans la paroi latérale (8), ses renforts (11) étant disposés parallèlement les uns aux autres dans la direction périphérique.

8. Bandage pneumatique pour roue de véhicule selon la revendication 7, **caractérisé en ce que** la couche supplémentaire de renfort (13) repose axialement par l'extérieur sur la couche de carcasse (3).

9. Bandage pneumatique pour roue de véhicule selon la revendication 7, **caractérisé en ce que** la couche supplémentaire de renfort (13) est disposée à distance axiale de la couche de carcasse (3).

10. Bandage pneumatique pour roue de véhicule selon l'une ou plusieurs des revendications 6 à 9, **caractérisé en ce que** la couche supplémentaire de renfort (13) s'étend sur la longueur de la paroi latérale (8) de telle sorte que la couche supplémentaire de renfort (13) commence sensiblement à 5 mm en dessous de la ceinture (2) et s'étend sur au plus environ 30 mm au-dessus de l'extrémité supérieure de l'âme de bourrelet (6).
